# EUROPEAN PATENT APPLICATION

(11) **EP 4 756 880 A1**
(43) Date of publication of application: **10.06.2026**
(21) Application number: 24874910.3
(22) Date of filing: 27.09.2024
(51) Int. Cl.: H01M 4/04, H01M 10/04, B65H 5/36

(54) **ELECTRODE TAB GUIDE DEVICE**

(30) Priority: 05.10.2023 KR 20230132759
(71) Applicant: LG Energy Solution, Ltd., Seoul 07335 (KR)
(72) Inventor: JO, Hyeon Sung, Daejeon 34122 (KR); LEE, Jae Young, Daejeon 34122 (KR); LEE, Seung Hyuk, Daejeon 34122 (KR)
(74) Representative: Goddar, Heinz J.
(86) International application number: PCT/KR2024/014682
(87) International publication number: WO 2025/075353

(57) **Abstract**

The present disclosure relates to an electrode tab guide device for guiding electrode tabs provided at an edge of an electrode sheet being transferred by a roller. The electrode tab guide device includes: a guide body disposed on a side of a periphery of the roller; a first guide member that is spaced apart from the guide body in a peripheral direction of the roller, and guides the electrode tabs onto an outer peripheral surface of the roller; and a first adjustment unit that is coupled to the first guide member and the guide body, respectively, and adjusts a distance between the first guide member and the guide body.

## Description

### TECHNICAL FIELD

### CROSS-REFERENCE TO RELATED APPLICATIONS

This application is based on and claims priority from Korean Patent Application No. 10-2023-0132759, filed on October 5, 2023, with the Korean Intellectual Property Office, the disclosure of which is incorporated herein in its entirety by reference.

### TECHNICAL FIELD

The present disclosure relates to an electrode tab guide device for guiding electrode tabs of an electrode sheet being transferred by a roller.

### BACKGROUND ART

In recent years, with the rapid proliferation of electronic devices using batteries such as mobile phones, notebook computers, and electric vehicles, the demand for small, lightweight, and relatively high-capacity secondary batteries has rapidly increased. In particular, lithium secondary batteries are gaining attention as a power source for mobile devices due to their light weight and high energy density.

In order to manufacture the secondary batteries, electrode sheets are generally used. At the edge of an electrode sheet, electrode tabs may be formed by a notching process. The electrode tabs are later connected to an electrode lead, to be used for electrically connecting a secondary battery to an external power source or load.

Meanwhile, in the notching process, an electrode tab guide device is used to guide the electrode tabs of the electrode sheet, and extensive researches have been conducted to improve the problems of conventional guide devices.

### SUMMARY

### TECHNICAL PROBLEM

The present disclosure provides an electrode tab guide device, which may appropriately guide electrode tabs of an electrode sheet being transferred by a roller in accordance with various manufacturing environments.

The problems of the present disclosure are not limited to the above-described problems, and other problems not mentioned herein may be clearly understood by those of ordinary skill in the art from the following description of the present disclosure.

### TECHNICAL SOLUTION

An aspect of the present disclosure provides an electrode tab guide device for guiding electrode tabs provided at an edge of an electrode sheet being transferred by a roller. The electrode tab guide device includes: a guide body disposed on a side of a periphery of the roller; a first guide member that is spaced apart from the guide body in a peripheral direction of the roller, and guides the electrode tabs onto an outer peripheral surface of the roller; and a first adjustment unit that is coupled to the first guide member and the guide body, respectively, and adjusts a distance between the first guide member and the guide body.

At least a portion of the first adjustment unit may be bendable or pivotable in a radial direction of the roller.

At least the portion of the first adjustment unit may have a pleated shape.

The first adjustment unit may include a plurality of link members coupled to each other in a straight pattern to be pivotable relative to each other.

The first adjustment unit may include a guide body-side sliding member connected to the guide body and a guide member-side sliding member connected to the first guide member, and the guide body-side sliding member and the guide member-side sliding member may be slidably coupled to each other.

The guide body may have an arc shape extending in the peripheral direction of the roller.

The first guide member may have a shape extending in the peripheral direction of the roller, and tapered toward an end thereof in a cross-sectional view.

The first guide member may include a first guide surface extending such that a gap between the first guide surface and the roller gradually increases along the peripheral direction of the roller.

The electrode tab guide device may further include: a second guide member that is spaced apart from the first guide member in the peripheral direction of the roller in a state where the guide body is sandwiched between the first guide member and the second guide member, and guides the electrode tabs from the outer peripheral surface of the roller to an outside of the roller.

The electrode tab guide device may further include: a second adjustment unit that is coupled to the second guide member and the guide body, respectively, and adjusts a distance between the second guide member and the guide body.

### ADVANTAGEOUS EFFECTS

In the electrode tab guide device according to an aspect of the present disclosure, the distance between the first guide member and the guide body may be appropriately adjusted by the first adjustment unit, so that the electrode tabs of the electrode sheet being transferred by the roller may be appropriately guided in accordance with various manufacturing environments.

In the electrode tab guide device according to an aspect of the present disclosure, the position of the first guide member may be appropriately adjusted in the radial direction of the roller in the manner that the first adjustment unit bends or pivots, so that the electrode tabs of the electrode sheet being transferred by the roller may be appropriately guided in accordance with various manufacturing environments.

In the electrode tab guide device according to an aspect of the present disclosure, the distance between the first and second guide members spaced apart along the radial direction of the roller with respect to the guide body may be adjusted by the first and second adjustment members, so that the electrode tabs of the electrode sheet being transferred by the roller may be appropriately guided in accordance with various manufacturing environments.

The effects of the present disclosure are not limited to those described above, and other effects that are not described herein may be clearly understood by one of ordinary skill in the art from the descriptions herein below and the accompanying drawings.

### BRIEF DESCRIPTION OF THE DRAWINGS

Since the drawings attached herewith illustrate an exemplary embodiment of the present disclosure and serve to facilitate the understanding of the technical idea of the present disclosure in conjunction with the detailed description of the disclosure herein below, the present disclosure should not be construed as being limited to the matters illustrated in the drawings.
FIG. 1 is a perspective view illustrating an electrode tab guide device according to a first embodiment of the present disclosure, which is guiding electrode tabs of an electrode sheet being transferred by a roller.
FIG. 2 is a vertical cross-sectional view illustrating the electrode tab guide device according to the first embodiment of the present disclosure, which is guiding the electrode tabs of the electrode sheet being transferred by the roller.
FIG. 3 is a vertical cross-sectional view illustrating an operation in which the distance between a guide body and a first guide member of the electrode tab guide device according to the first embodiment of the present disclosure is adjusted in accordance with the width of an electrode tab.
FIG. 4 is a vertical cross-sectional view illustrating an operation in which the distance between the guide body and the first guide member of the electrode tab guide device according to the first embodiment of the present disclosure is adjusted in accordance with the size of the roller.
FIG. 5 is a vertical cross-sectional view illustrating an operation in which the distance between the guide body and the first guide member of the electrode tab guide device according to the first embodiment of the present disclosure is adjusted in accordance with the transfer direction of the electrode sheet.
FIG. 6 is a vertical cross-sectional view illustrating an electrode tab guide device according to a second embodiment of the present disclosure, which is guiding electrode tabs of an electrode sheet being transferred by a roller.
FIG. 7 is a vertical cross-sectional view illustrating an electrode tab guide device according to a third embodiment of the present disclosure, which is guiding electrode tabs of an electrode sheet being transferred by a roller.
FIG. 8 is a vertical cross-sectional view illustrating an electrode tab guide device according to a fourth embodiment of the present disclosure, which is guiding electrode tabs of an electrode sheet being transferred by a roller.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

Hereinafter, embodiments of the present disclosure are described in detail to facilitate the practicing by one of ordinary skill in the art to which the present disclosure belongs. The present disclosure may be implemented in various different forms, and is not limited or restricted by the embodiments described herein below.

In order to clearly describe the present disclosure, descriptions of parts unrelated to the description of the present disclosure or detailed descriptions of related well-known art that may not be germane to the understanding of the present disclosure will be omitted. When assigning reference numerals for components in each drawing, the same or similar components throughout the descriptions herein will be denoted with the same or similar reference numerals.

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

In the process of manufacturing secondary batteries, an electrode sheet is typically transferred by a roller. However, when the electrode sheet passes over a roller, electrode tabs formed at the edge of the electrode sheet may be folded or dented due to, for example, the gravity or the fluctuation of the roller. The deformation of the electrode tabs may cause defects in secondary batteries or problems in tension adjustment and rolling speed of the roller.

In the roller for transferring the electrode sheet, a separate device is provided to guide the electrode tabs. The separate device for guiding the electrode tabs guides the electrode tabs to bend smoothly along the curvature of the roller when passing over the roller, which minimizes the deformation of the electrode tabs described above.

The present disclosure provides a guide device capable of appropriately adjusting, for example, a parameter in accordance with circumstances during a process, instead of providing a guide device designed and installed in accordance with a preset manufacturing environment. For example, the present disclosure provides a guide device that may appropriately guide electrode tabs by adjusting a parameter such as, for example, the length of the guide device, even in the case where the shape of an electrode tab including the width of an electrode tab changes when the electrode tab passes over the roller.

Hereinafter, embodiments of the present disclosure are described with reference to the drawings.

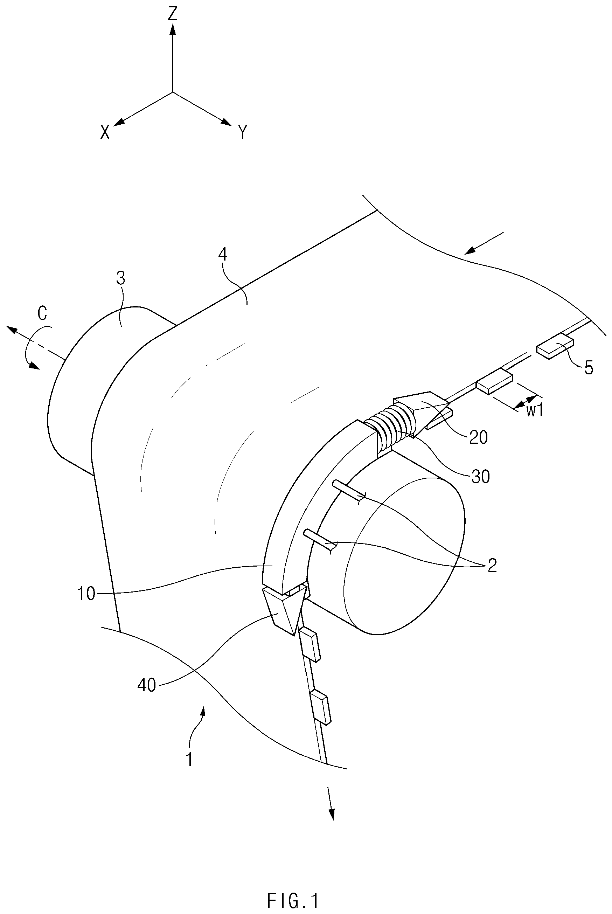

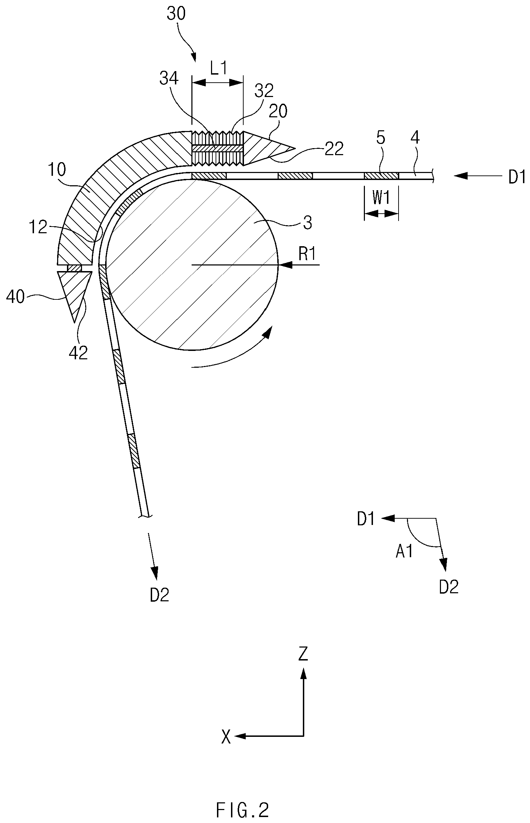

FIG. 1 is a perspective view illustrating an electrode tab guide device according to a first embodiment of the present disclosure, which is guiding electrode tabs of an electrode sheet being transferred by a roller. FIG. 2 is a vertical cross-sectional view illustrating the electrode tab guide device according to the first embodiment of the present disclosure, which is guiding the electrode tabs of the electrode sheet being transferred by the roller.

FIG. 1 illustrates an electrode tab guide device (hereinafter, referred to as a guide device) 1 according to the first embodiment of the present disclosure. The guide device 1 according to the first embodiment of the present disclosure is a device for guiding electrode tabs 5 of an electrode sheet 4 for secondary batteries that is being transferred by a roller 3, to smoothly pass over the roller 3.

Referring to FIGS. 1 and 2, the electrode sheet 4 for secondary batteries in the present disclosure may be provided in the form of an elongated sheet, which is obtained, for example, by applying an electrode active material to a metal foil.

In the present embodiment, the metal foil used for the electrode sheet 4 may be made of aluminum (Al) or copper (Cu). The electrode active material may be, for example, lithium-cobalt oxide (LCO), lithium-manganese oxide (LMO), nickel-cobalt-manganese (NCM), nickel-cobalt-aluminum (NCA), lithium-iron phosphate (LFP), graphite (C), or silicon (Si).

The type of metal foil and the type of electrode active material that are used for the electrode sheet 4 may be selected appropriately according to the type of electrode to be manufactured using the electrode sheet 4, for example, whether the type of electrode is a negative electrode or a positive electrode. However, the type of material of the metal foil and the type of electrode active material are not limited to those described above, and various materials and types may be used according to, for example, the shape or type of secondary battery.

A plurality of electrode tabs 5 may be provided on the side of the edge of the electrode sheet 4. The plurality of electrode tabs 5 may be provided to be spaced apart from each other at regular intervals along the extension direction of the electrode sheet 4. Each electrode tab 5 may protrude outwardly from the electrode sheet 4, and may have a square shape with a predetermined width W1. However, without being limited thereto, for example, the shape of the electrode tab 5 may be modified appropriately as needed.

The electrode tabs 5 may function as passageways for connecting electrodes fabricated by the electrode sheet 4 to an external power source or load. The electrode tabs 5 may be typically formed by a notching process, but is not limited thereto.

In the present disclosure, the electrode sheet 4 may be transferred by rolling on the outer periphery of the roller 3 that extends in the Y-axis direction and is rotatable about its own axis. To this end, the electrode sheet 4 may be transferred toward the roller 3 along the first direction D1, and wound from a specific point on the roller 3. The first direction D1 may be parallel to the tangent line of the specific point of the roller 3.

Further, the electrode sheet 4 may be unwound from another specific point on the roller 3 along the second direction D2. The second direction D2 may be parallel to the tangent line of another specific point of the roller 3. The first direction D1 and the second direction D2 may be adjusted appropriately as needed.

In the present disclosure, the roller 3 may be a driving roller. A driving device may be coupled to the driving roller to operate the driving roller. Accordingly, the driving roller may be rotated by the driving force of the driving device, and the electrode sheet 4 may be transferred by the force generated by the driving force of the driving device.

Alternatively, the roller 3 may be a driven roller. In this case, a separate driving device may not be coupled to the driven roller. Instead, the driven roller may be rotated by the frictional force with the electrode sheet 4. The driven roller may be used to switch the transfer direction of the electrode sheet 4 or support the electrode sheet 4.

Meanwhile, the electrode tabs 5 may be damaged while the electrode sheet 4 is transferred by rolling on the roller 3. For example, the electrode tabs 5 may be crooked or folded due to, for example, the gravity or the fluctuation of the roller 3. The deformation of the electrode tabs 5 may cause defects in secondary batteries or problems in tension adjustment and rolling speed of the roller 3.

In order to solve the problems above, the guide device 1 according to the first embodiment of the present disclosure may be used. The guide device 1 according to the present embodiment guides the electrode tabs 5 such that the electrode tabs 5 smoothly bend and roll on the roller 3, which may prevent the unexpected deformation of the electrode tabs 5.

Referring to FIGS. 1 and 2, the guide device 1 according to the first embodiment of the present disclosure may include a guide body 10. In the present embodiment, the guide body 10 is a member that guides the electrode tabs 5 to roll on the outer periphery of the roller 3.

In the present embodiment, the guide body 10 may be spaced apart from the roller 3, while forming a gap from the peripheral side of the roller 3. In this case, the guide body 10 may be restricted from moving or rotating relative to the roller 3. As illustrated, the guide body 10 may be connected to, for example, a specific fixing position of a notching apparatus by separate support rods 2, so that the position of the guide body 10 may be fixed. However, the method of fixing the position of the guide body 10 is not particularly limited, and may be selected appropriately as long as the relative position to the roller 3 may be maintained, achieving the effects of the present disclosure.

In the present embodiment, the guide body 10 may be positioned on the path along which the electrode tabs 5 move, on the peripheral side of the roller 3. This configuration is designed so that the guide body 10 may guide the electrode tabs 5 while being in direct contact with the electrode tabs 5.

Referring to FIG. 2, at least a portion of the guide body 10 of the guide device 1 according to the first embodiment of the present disclosure may have an arc shape to follow the peripheral direction of the roller 3.

In the present embodiment, a body-side guide surface 12 may be provided on the side portion of the guide body 10 to face the outer peripheral surface of the roller 3. In this case, the length of the section where the guide body 10 or the body-side guide surface 12 surrounds the outer periphery of the roller 3 may be appropriately adjusted.

In the present embodiment, the body-side guide surface 12 may be spaced apart from the outer peripheral surface of the roller 3 by a predetermined distance. As a result, a predetermined gap may be formed between the body-side guide surface 12 and the outer peripheral surface of the roller 3. The gap may be provided along the peripheral direction of the roller 3.

Accordingly, the electrode tabs 5 may smoothly roll on the outer periphery of the roller 3 while passing though the gap. At this time, the size of the gap *(e.g.,* the distance between the body-side guide surface 12 and the outer peripheral surface of the roller 3) may be appropriately adjusted according to, for example, the thickness or the width of the electrode sheet 4 or the electrode tab 5, and the rotation speed or size of the roller 3.

In the present embodiment, the size of the gap may be constant along the peripheral direction of the roller 3. To this end, the body-side guide surface 12 may extend in parallel to the outer peripheral surface of the roller 3 along the peripheral direction of the roller 3. However, the shape of the body-side guide surface 12 is not particularly limited as long as the electrode tabs 5 may be guided to roll on the outer periphery of the roller 3.

Referring to FIGS. 1 and 2, the guide device 1 according to the first embodiment of the present disclosure may include a first guide member 20. In the present embodiment, the first guide member 20 guides the electrode tabs 5 being transferred toward the roller 3, onto the outer peripheral surface of the roller 3. By the first guide member 20, the electrode tabs 5 may be guided into the space (gap) between the guide body 10 and the outer peripheral surface of the roller 3.

In the present embodiment, the first guide member 20 may be disposed to form a predetermined space from one end of the guide body 10. In this case, the first guide member 20 may be disposed to be directed toward the electrode sheet 4 being transferred toward the roller 3. This configuration is designed so that the first guide member 20 may face and guide the electrode tabs 5 before the guide body 10 faces the electrode tabs 5.

Referring to FIG. 2, in the present embodiment, the first guide member 20 may extend in the direction substantially parallel to the first direction D1. According to an embodiment, the cross section of the first guide member 20 may be configured in the form of a wedge tapered toward the end thereof, in order to stably guide the electrode tabs 5.

In this case, a first guide surface 22 may be provided at the side portion of the first guide member 20. In the present embodiment, the first guide surface 22 may be a surface that first faces and guides the electrode tabs 5 being transferred toward the roller 3.

According to the present embodiment, the first guide surface 22 may extend such that the space from the outer peripheral surface of the roller 3 increases along the peripheral direction of the roller 3. In other words, the first guide surface 22 may extend while being inclined outwardly from the roller 3 along the peripheral direction of the roller 3. In this case, the first guide surface 22 may be directed toward the electrode sheet 4 being transferred toward the roller 3.

With the configuration described above, the space between the first guide surface 22 and the outer peripheral surface of the roller 3 may gradually become narrow along the first direction D1 and communicate with the gap between the guide body 10 and the roller 3.

As a result, the electrode tabs 5 being transferred toward the roller 3 may be guided smoothly into the gap between the guide body 10 and the roller 3 along the space between the first guide surface 22 and the roller 3. Thus, for example, the electrode tabs 5 may be prevented from rising outward over the first guide member 20.

In the present embodiment, the first guide member 20 has the wedge shape, and the first guide surface 22 is the inclined plane. However, the shapes of the first guide member 20 and the first guide surface 22 are not particularly limited as long as the electrode tabs 5 may be guided into the gap between the guide body 10 and the roller 3. For example, the first guide member 20 may be provided in the form of a frame or plate, and the first guide surface 22 may be formed to have a curved portion.

Referring back to FIGS. 1 and 2, the guide device 1 according to the first embodiment of the present disclosure may include a first adjustment unit 30. In the present embodiment, the first adjustment unit 30 adjusts the distance between the first guide member 20 and the guide body 10.

To this end, one side of the first adjustment unit 30 of the guide device 1 according to the present embodiment may be coupled to the guide body 10, and the other side thereof may be coupled to the first guide member 20. Further, the first adjustment unit 30 may be configured to be deformable in length or bendable in the radial direction of the roller 3.

In an example, as illustrated, the first adjustment unit 30 may include a pleated tube 32 *(e.g.,* bellows) extending along the periphery of the roller 3. In this case, both sides of the pleated tube 32 in the extension direction may be coupled to the first guide member 20 and the guide body 10, respectively. The length of the pleated tube 32 changes, so that the distance between the first guide member 20 and the guide body 10 may be adjusted.

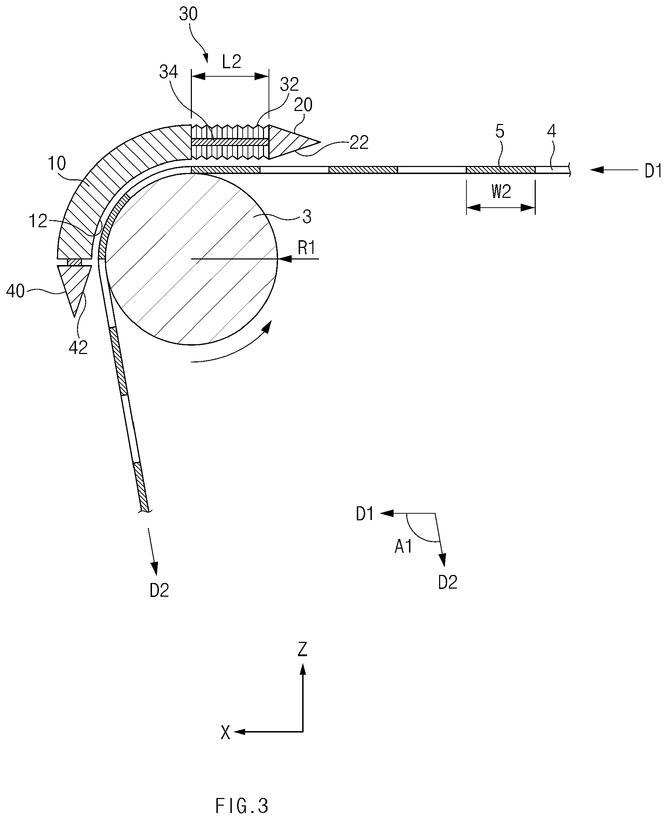

Alternatively, the pleated tube 32 bends or tilts, so that the position of the first guide member 20 may be adjusted. The specific effects resulting from this configuration are described herein later with reference to FIGS. 3 to 5. According to an embodiment, the adjustment of the length, bending and/or tilting of the pleated tube 32 may be performed in a manual manner, e.g., by hand of an operator, or may be performed in an appropriate automation manner, e.g., using a driving device such as a motor and a controller.

Meanwhile, the first adjustment unit 30 of the guide device 1 according to the first embodiment of the present disclosure may include a support member 34. The support member 34 complements the rigidity of the pleated tube 32 described above.

In the present embodiment, the support member 34 may be provided inside the pleated tube 32. The support member 34 may extend along the longitudinal direction of the pleated tube 32. In this case, both sides of the support member 34 in the extension direction may be coupled to the guide body 10 and the first guide member 20, respectively. Thus, the guide body 10 or the first guide member 20 may be supported by the support member 34, so that the load applied to the pleated tube 32 may be reduced.

According to the present embodiment, the support member 34 may be made of a material or structure having a predetermined flexibility or elasticity against an external force equal to or stronger than a predetermined force magnitude, and having a rigidity for resisting an external force less than the predetermined force magnitude.

As a result, when a large external force is applied, the support member 34 may may stretch or bend in accordance with the change in length of the pleated tube 32 or the degree of bending of the pleated tube 32, and when a small external force such as the weight of the first guide member 20 is applied, the support member 34 may maintain the changed length or the bent shape of the pleated tube 32 by resisting the small external force.

Referring to FIGS. 1 and 2, the guide device 1 according to the first embodiment of the present disclosure may include a second guide member 40. In the present embodiment, the second guide member 40 guides the electrode tabs 5 releasing outward from the outer peripheral surface of the roller 3. In this case, the electrode tabs 5 may be guided in the second direction D2 described above by the second guide member 40.

According to the present embodiment, the second guide member 40 may be disposed on the opposite side to the first guide member 20 in the longitudinal direction of the guide body 10, with the guide body 10 sandwiched between the first guide member 20 and the second guide member 40. In this case, the second guide member 40 may be disposed to form a predetermined space from the other end of the guide body 10. This configuration is designed so that the second guide member 40 may guide the electrode tabs 5 releasing from the gap between the guide body 10 and the outer peripheral surface of the roller 3.

Referring to FIG. 2, in the present embodiment, the second guide member 40 may extend in the direction substantially parallel to the second direction D2. The cross section of the second guide member 40 may be tapered toward the end thereof.

At this time, a second guide surface 42 may be provided at the side portion of the second guide member 40. In the present embodiment, the second guide surface 42 may be a surface for guiding the electrode tabs 5 releasing from the gap between the outer peripheral surface of the roller 3 and the guide body 10.

According to the present embodiment, the second guide surface 42 may extend such that the space from the outer peripheral surface of the roller 3 gradually increases along the peripheral direction of the roller 3. In other words, the second guide surface 42 may extend while being inclined outwardly from the roller 3 along the peripheral direction of the roller 3. In this case, the second guide surface 42 may be directed toward the direction in which the electrode sheet 4 is unwound from the roller 3 (*i.e.,* the second direction D2).

With the configuration described above, the space between the second guide surface 42 and the outer peripheral surface of the roller 3 may gradually increase along the second direction D2. As a result, the electrode tabs 5 being transferred to the outside of the roller 3 may be guided smoothly along the space between the second guide surface 42 and the outer peripheral surface of the roller 3. That is, the electrode tabs 5 may be prevented from being deformed unexpectedly during the process in which the electrode tabs 5 are transferred to the outside of the roller 3.

In the embodiment illustrated, the second guide member 40 is illustrated to be symmetrical in shape with the first guide member 20. However, without being limited thereto, for example, the second guide member 40 may have a different shape from the first guide member 20 as long as the electrode tabs 5 may be guided to the outside of the roller 3.

Hereinafter, descriptions are made on examples of various effects resulting from the first adjustment unit 30 of the guide device 1 according to the first embodiment of the present disclosure, with reference to other drawings. One of the various effects resulting from the first adjustment unit 30 of the guide device 1 according to the present embodiment may be as follows.

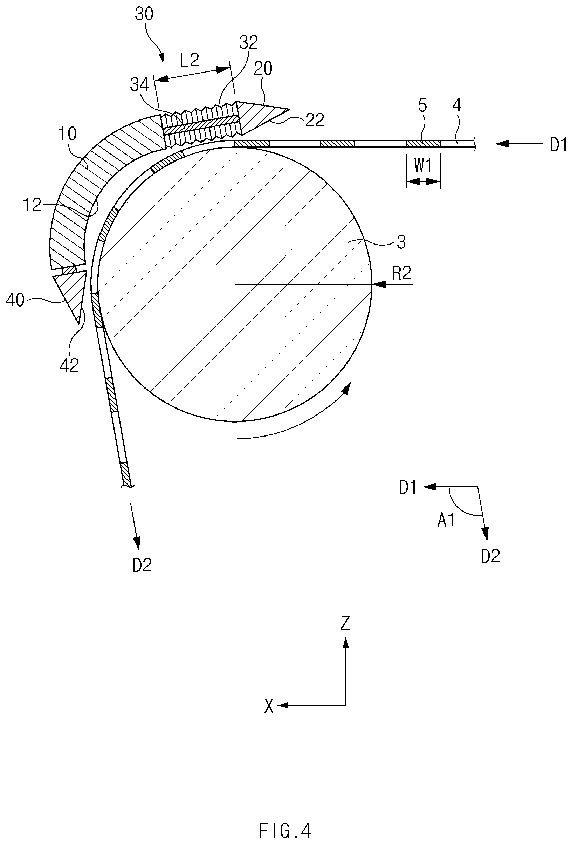

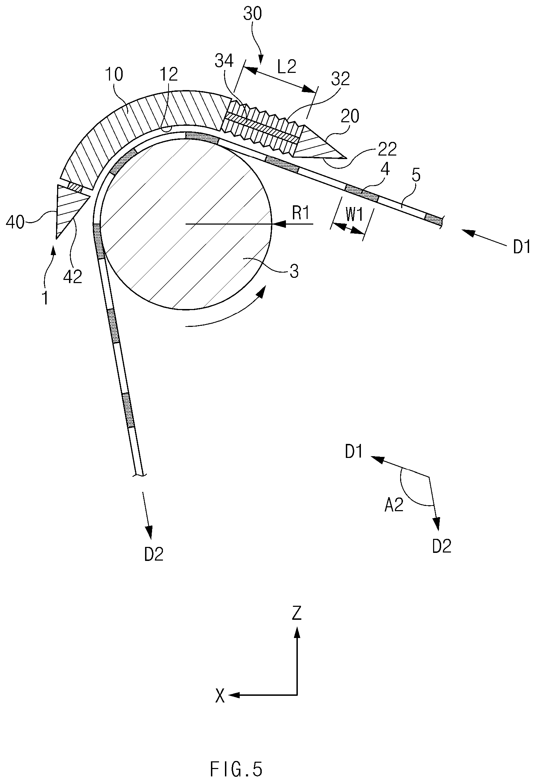

FIG. 3 is a vertical cross-sectional view illustrating an operation in which the distance between the guide body and the first guide member of the electrode tab guide device according to the first embodiment of the present disclosure is adjusted in accordance with the width of an electrode tab. FIG. 4 is a vertical cross-sectional view illustrating an operation in which the distance between the guide body and the first guide member of the electrode tab guide device according to the first embodiment of the present disclosure is adjusted in accordance with the size of the roller. FIG. 5 is a vertical cross-sectional view illustrating an operation in which the distance between the guide body and the first guide member of the electrode tab guide device according to the first embodiment of the present disclosure is adjusted in accordance with the transfer direction of the electrode sheet.

Referring to FIG. 3, the distance between the first guide member 20 and the guide body 10 needs to be adjusted in accordance with the width W2 of an electrode tab 5. For example, in order to guide the electrode tab 5 having a relatively larger width W2, the first guide member 20 needs to be further spaced apart from the guide body 10. This is because the length of the section in which the first guide member 20 guides the electrode tab 5 may increase due to the relatively larger width W2 of the electrode tab 5.

In the guide device 1 according to the first embodiment of the present disclosure, the distance between the first guide member 20 and the guide body 10 may be appropriately adjusted by the first adjustment unit 30 in accordance with the width of the electrode tab 5. This adjustment may be performed by changing the length of the first adjustment unit 30.

In an example, as illustrated in FIG. 2, the first guide member 20 and the guide body 10 may be spaced apart from each other by a first length L1, in order to guide the electrode tab 5 having a first width W1.

Meanwhile, as illustrated in FIG. 3, the first guide member 20 and the guide body 10 may be spaced apart from each other by a second length L2, which is longer than the first length L1, in order to guide the electrode tab 5 having a second width W2, which is longer than the first width W1.

One of the various effects resulting from the first adjustment unit of the guide device according to the present embodiment may be as follows. Referring to FIGS. 2 and 4 together, the distance between the first guide member 20 and the guide body 10 needs to be adjusted in accordance with the size of the roller 3, *i.e.,* the radius of the roller 3. This is because the length or curvature of the section in which the first guide member 20 guides the electrode tab 5 may change as the radius of the roller increases.

In the guide device 1 according to the first embodiment of the present disclosure, the distance between the first guide member 20 and the guide body 10 may be appropriately adjusted by the first adjustment unit 30 in accordance with the radius of the roller 3. This adjustment may be performed by changing the length of the first adjustment unit 30.

In an example, FIG. 2 illustrates the state where the first guide member 20 and the guide body 10 are spaced apart from each other by the first length L1 such that the electrode tab 5 is guided to roll on the roller 3 having a first radius R1.

Meanwhile, FIG. 4 illustrates the state where the first guide member 20 and the guide body 10 are spaced apart from each other by the second length L2 longer than the first length L1 such that the electrode tab 5 is guided to roll on the roller 3 having a second radius R2 larger than the first radius R1.

The effect described above may also be achieved in the manner that the first adjustment unit 30 bends to adjust the relative position between the first guide member 20 and the guide body 10, while maintaining the distance between the first guide member 20 and the guide body 10 to be the first length L1. Alternatively, the effect may also be achieved by adjusting both the length and the bending angle of the first adjustment unit 30.

Another of the various effects resulting from the first adjustment unit of the guide device according to the present embodiment may be as follows. Referring to FIGS. 2 and 4 together, the distance between the first guide member 20 and the guide body 10 needs to be adjusted in accordance with the direction of the transfer of the electrode sheet 4 by the roller 3. This is because the length of the section in which the first guide member 20 guides the electrode tab 5 may change according to the transfer direction of the electrode sheet.

This adjustment may be performed by changing the length of the first adjustment unit 30. In this case, the transfer direction of the electrode sheet 4 may be expressed by the angle between the first direction D1 in which the electrode sheet 4 is wound and the second direction D2 in which the electrode sheet 4 is unwound.

In an example, FIG. 2 illustrates the case where the angle between the first direction D1 and the second direction D2 is a first angle A1. At this time, the first guide member 20 and the guide body 10 may be spaced apart from each other by the first length L1 such that the electrode tab 5 is guided to roll on the roller 3.

Meanwhile, FIG. 5 illustrates the case where the angle between the first direction D1 and the second direction D2 is a second angle A2 larger than the first angle A1. At this time, the first guide member 20 and the guide body 10 may be spaced apart from each other by the second length L2 longer than the first length L1 such that the electrode tab 5 is guided to roll on the roller 3.

The effect described above may also be achieved in the manner that the first adjustment unit 30 bends to adjust the relative position between the first guide member 20 and the roller 3, while maintaining the distance between the first guide member 20 and the guide body 10 to be the first length L1. Alternatively, the effect may also be achieved by adjusting both the length and the bending angle of the first adjustment unit 30.

Thus, in the guide device 1 according to the first embodiment of the present disclosure, the distance between the first guide member 20 and the guide body 10 and/or the relative position between the first guide member 20 and the roller 3 may be appropriately adjusted by the first adjustment unit 30, so that the electrode tabs 5 may be appropriately guided in accordance with various manufacturing environments.

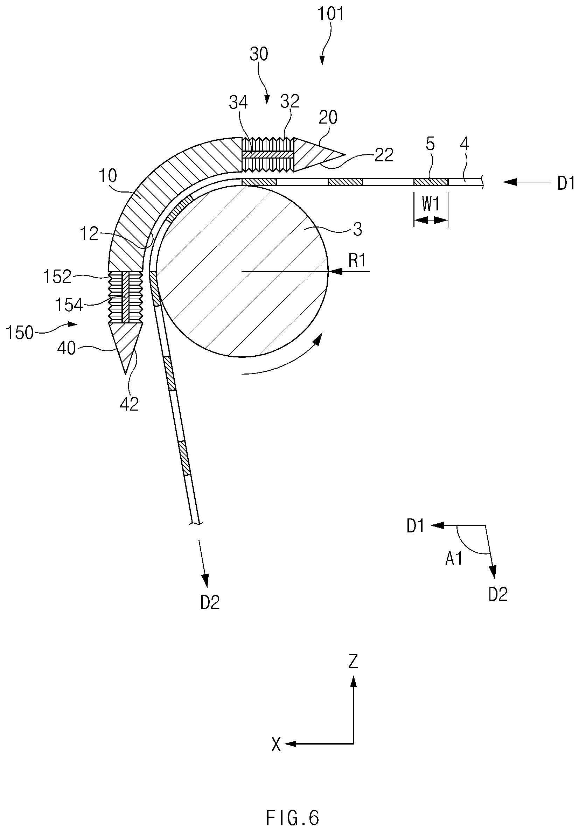

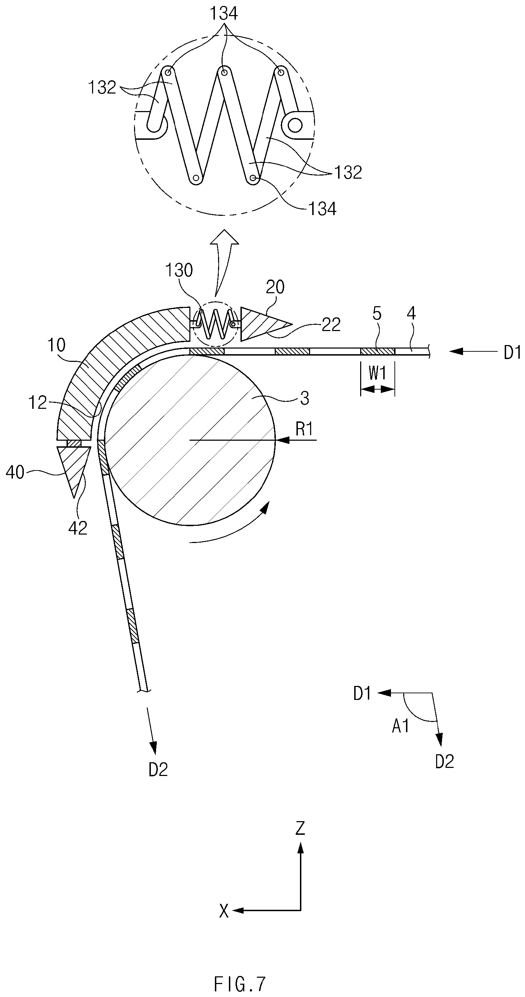

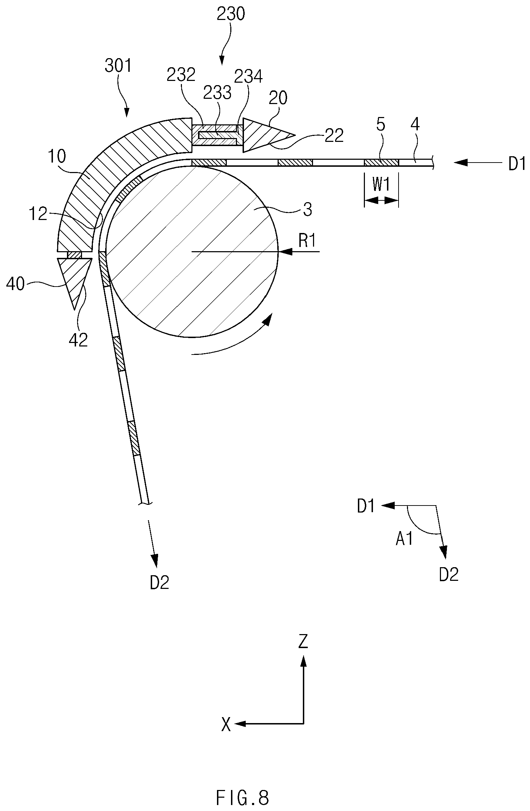

Hereinafter, a guide device according to another embodiment of the present disclosure is described with respect to other drawings. FIG. 6 is a vertical cross-sectional view illustrating an electrode tab guide device according to a second embodiment of the present disclosure, which is guiding electrode tabs of an electrode sheet being transferred by a roller. FIG. 7 is a vertical cross-sectional view illustrating an electrode tab guide device according to a third embodiment of the present disclosure, which is guiding electrode tabs of an electrode sheet being transferred by a roller. FIG. 8 is a vertical cross-sectional view illustrating an electrode tab guide device according to a fourth embodiment of the present disclosure, which is guiding electrode tabs of an electrode sheet being transferred by a roller.

FIG. 6 illustrates a guide device 101 according to the second embodiment of the present disclosure. Referring to FIG. 6, the guide device 101 according to the second embodiment of the present disclosure may further include a second adjustment unit 150, in addition to the guide body 10, the first guide member 20, the first adjustment unit 30, and the second guide member 40.

In the present embodiment, both sides of the second adjustment unit 150 may be coupled to the guide body 10 and the second guide member 40, respectively, and may be configured to adjust the distance between the second guide member 40 and the guide body 10.

Alternatively, the second adjustment unit 150 may be configured to bend or curve in the radial direction of the roller 3. With this configuration, the second adjustment unit 150 may adjust the position of the second guide member 40.

According to the second embodiment of the present disclosure, the second adjustment unit 150 may include a pleated tube 152 as illustrated. In this case, the pleated tube 152 may extend in the peripheral direction of the roller 3. Both sides of the pleated tube 152 in the extension direction may be coupled to the guide body 10 and the second guide member 40, respectively.

Thus, the pleats of the pleated tube 152 expand or retract, so that the distance between the guide body 10 and the second guide member 40 may be adjusted. Further, the pleated tube 152 bends in one direction, so that the position of the second guide member 40 may be adjusted.

Meanwhile, the second adjustment unit 150 of the guide device 101 according to the second embodiment of the present disclosure may include a support member 154. In the present embodiment, the support member 154 of the second adjustment unit 150 may be provided inside the pleated tube 152.

The support member 154 may extend in parallel to the pleated tube 152, such that both sides of the support member 154 may be coupled to the guide body 10 and the second guide member 40, respectively. Thus, the guide body 10 or the first guide member 20 may be supported by the support member 154, so that the load applied to the pleated tube 152 may be reduced.

The support member 154 of the guide device 101 according to the present embodiment may be made of the same or similar material or structure as the support member 34 of the guide device 1 according to the first embodiment of the present disclosure described above (illustrated in FIG. 2). Thus, the expanded length or bent shape of the pleated tube 152 may be maintained with a predetermined rigidity.

In the guide device 101 according to the second embodiment of the present disclosure, the distance between the second guide member 40 and the guide body 10 and/or the relative position between the second guide member 40 and the roller 3 may be appropriately adjusted by the second adjustment unit 150, so that the electrode tabs 5 may be appropriately guided in accordance with various manufacturing environments.

Meanwhile, in the illustrated embodiment, the first adjustment unit 30 and the second adjustment unit 150 have the similar pleated structure. However, the first adjustment unit 30 and the second adjustment unit 150 may have different structures.

FIG. 7 illustrates a guide device 201 according to the third embodiment of the present disclosure. Referring to FIG. 7, the first adjustment unit 130 of the guide device 201 according to the third embodiment of the present disclosure may have a link structure.

In other words, in the present embodiment, the first adjustment unit 130 may include a plurality of link members 132. In this case, each link member 132 may have a rod shape extending in one direction.

In the present embodiment, the plurality of link members 132 may be coupled in a straight pattern. Further, the plurality of link members 132 may be coupled to be pivotable relative to each other. To this end, a link member 132 may be coupled to another neighboring link member 132 by a pin member 134. However, the coupling structure among the plurality of link members 132 is not particularly limited as long as, for example, the link members 135 may pivot.

With this configuration, the distance between the guide body 10 and the first guide member 20 may be adjusted by the first adjustment unit 130 described above. For example, the distance may increase when the plurality of link members 132 spread apart from each other, and may decrease when the plurality of link members 132 retract to be close to each other.

Further, the position of the first guide member 20 may be adjusted. For example, when the angles among the plurality of link members 132 are adjusted to be different from each other, the first guide member 20 may move outward or inward in the radial direction of the roller 3.

In the guide device 201 according to the third embodiment of the present disclosure, the distance between the first guide member 20 and the guide body 10 and/or the relative position between the first guide member 20 and the roller 3 may be appropriately adjusted by the first adjustment unit 130, so that the electrode tabs 5 may be appropriately guided in accordance with various manufacturing environments.

FIG. 8 illustrates a guide device 301 according to the fourth embodiment of the present disclosure. Referring to FIG. 8, the first adjustment unit 230 of the guide device 301 according to the third embodiment of the present disclosure may have a sliding coupling structure.

In other words, the first adjustment unit 230 of the guide device 301 according to the third embodiment of the present disclosure may include a guide body-side sliding member 232 and a guide member-side sliding member 234.

In the present embodiment, the guide body-side sliding member 232 may be connected to the guide body 10. A guide groove 233 may be formed in the guide body-side sliding member 232. The guide groove 233 may extend from the guide body 10 in the direction toward the first guide member 20. The guide groove 233 may be provided in the form of a hole.

In the present embodiment, the guide member-side sliding member 234 may be connected to the first guide member 20. A protrusion may be provided in the guide member-side sliding member 234 to be slidably coupled to the guide groove 233 described above.

When the guide member-side sliding member 234 slides along the guide groove 233, the distance between the guide body 10 and the first guide member 20 may be adjusted. Thus, the guide device 301 according to the present embodiment may appropriately guide the electrode tabs 5 in accordance with various manufacturing environments.

In the embodiments described above, the first adjustment unit (or the second adjustment unit) have the pleated tube structure, the link structure, or the sliding coupling structure. However, the structure of the first adjustment unit is not particularly limited as long as the distance between the guide body and the first guide member (or the second guide member) may be adjusted, or the position of the first guide member (or the second guide member) may be adjusted.

While the present disclosure has been described with limited embodiments and drawings, the present disclosure is not limited thereto, and various embodiments may be made by one of ordinary skill in the art within the scope equivalent to the technical idea of the present disclosure and the claims described set forth below.

## Claims

1. An electrode tab guide device for guiding electrode tabs provided at an edge of an electrode sheet being transferred by a roller, the electrode tab guide device comprising:
a guide body disposed on a side of a periphery of the roller;
a first guide member spaced apart from the guide body in a peripheral direction of the roller, and configured to guide the electrode tabs onto an outer peripheral surface of the roller; and
a first adjustment unit coupled to the first guide member and the guide body, respectively, and configured to adjust a distance between the first guide member and the guide body.

2. The electrode tab guide device according to claim 1, wherein at least a portion of the first adjustment unit is bendable or pivotable in a radial direction of the roller.

3. The electrode tab guide device according to claim 2, wherein at least the portion of the first adjustment unit has a pleated shape.

4. The electrode tab guide device according to claim 2, wherein the first adjustment unit includes a plurality of link members coupled to each other in a straight pattern to be pivotable relative to each other.

5. The electrode tab guide device according to claim 1, wherein the first adjustment unit includes a guide body-side sliding member connected to the guide body and a guide member-side sliding member connected to the first guide member, and
the guide body-side sliding member and the guide member-side sliding member are slidably coupled to each other.

6. The electrode tab guide device according to claim 1, wherein the guide body has an arc shape extending in the peripheral direction of the roller.

7. The electrode tab guide device according to claim 1, wherein the first guide member has a shape extending in the peripheral direction of the roller, and tapered toward an end thereof in a cross-sectional view.

8. The electrode tab guide device according to claim 1, wherein the first guide member includes a first guide surface extending such that a gap between the first guide surface and the roller gradually increases along the peripheral direction of the roller.

9. The electrode tab guide device according to claim 1, further comprising:
a second guide member spaced apart from the first guide member in the peripheral direction of the roller in a state where the guide body is sandwiched between the first guide member and the second guide member, and configured to guide the electrode tabs from the outer peripheral surface of the roller to an outside of the roller.

10. The electrode tab guide device according to claim 9, further comprising:
a second adjustment unit coupled to the second guide member and the guide body, respectively, and configured to be able to adjust a distance between the second guide member and the guide body.
